# EUROPEAN PATENT SPECIFICATION

(11) **EP 3 032 157 B1**
(45) Date of publication and mention of the grant of the patent: **01.08.2018**
(21) Application number: 15195897.2
(22) Date of filing: 23.11.2015
(51) Int. Cl.: F16L 11/04, F16L 11/22, B29L 23/00, B29C 65/00, B29C 65/02

(54) **A FLEXIBLE HYDRAULIC HOSE**
FLEXIBLER HYDRAULIKSCHLAUCH
TUYAU HYDRAULIQUE FLEXIBLE

(30) Priority: 09.12.2014 IT MO20140357
(43) Date of publication of application: 15.06.2016
(73) Proprietor: Manitou Italia S.r.l., 41013 Castelfranco Emilia (Modena) (IT)
(72) Inventor: IOTTI, Marco, 42124 Reggio Emilia (IT)
(74) Representative: Gagliardelli, Fabrizio

(56) References cited:
- EP-A1- 2 143 984
- US-A- 2 122 335
- US-A- 3 794 079
- US-A- 5 918 640
- US-A1- 2008 271 832

## Description

The invention relates to a flexible hydraulic hose.

There are known flexible hoses for conveying fluids to hydraulically operated equipment, such as those mounted on telescopic handlers or similar machines.

Some of these "hoses" are formed by a plurality of conduits, each made of flexible material and joined one to another in order that several user devices may be fed.

In the present description, as well as in the jargon of the sector, by the term "hose", in the singular, reference is made to an hydraulic means of transport, also formed by a plurality of separate conduits, each having a tubular shape.

The reason that hoses of this type must be flexible is that through such hoses hydraulic distributors are linked to equipment movable in space in rotation or in translation.

An example is the special case of rotating telescopic arms, within which the hoses must be able to extend in length or slide about an axis of rotation, regardless of whether the hoses are guided by pulleys or not. A known type of flexible hose is formed by three or more conduits of elastomeric material, joined together and alongside one another on a same transversal plane, thereby defining a sort of planar bundle.

This hose of the known type exhibits some drawbacks.

First, the hoses generally have substantial transversal dimensions. It should be noted that telescopic arms have rather limited internal dimensions which do not allow the hoses to be housed internally thereof.

Hence, external hose reels must be employed around which the hoses are rolled up, which not only constitutes a complication and an additional cost, but also represents a source of technical difficulties.

In fact, hose reels are in practice often subject to shocks upon using the means the hose reels are associated with.

A further drawback is that when the hose is made to slide within the machine, such as internally of a telescopic arm, the hose tends to slide laterally in the transverse plane, i.e. in the plane of its development in width.

Because of this slippage, the hose can impact other components of the machine and become caught or otherwise rub onto surrounding surfaces. In addition, the known hose is very flexible in the direction perpendicular to its development in width, but it is not very flexible in the other directions, which makes it difficult to handle it effectively.

US2122335 discloses a method of making a multiple passage hose for transporting oxygen, acetylene, hydrogen gases or sulfuric acid and sodium carbonate solution. According to the method described in this document two tubings are extruded and then they are wrapped in fabric layers B. After that, the two tubings inserted into an extrusion machine so as to be incorporated into an external cover, which finally is vulcanized.

US5918640 describes a twin tube including two internal openings, covered by outer rubber layers joined by a web, the latter being intended to be slit so as to separate the twin tubes.

EP2143984 discloses a flexible hose which can comprise two internal channels realized in one piece in a matrix made of compound reinforced with glass fibres. US 2008/0271832 discloses a bundle of three tubes arranged in a non-coplanar assembly, wherein the three tubes are bound by a thermo-conductive heat-shrinkable outer sleeve.
In this context, the technical task underlying the present invention is to provide a flexible hydraulic element and a method for manufacturing such an element able to overcome the drawbacks of the known art. The technical task mentioned is achieved by the flexible hydraulic element in accordance with claim 1 and by the method for manufacturing a flexible hydraulic element, implemented in accordance with claim 8.

Further characteristics and advantages of the present invention will become more apparent from the indicative, and therefore non-limiting, description of a preferred but non-exclusive embodiment of a flexible hydraulic element and a method for manufacturing such element, as illustrated in the appended drawings wherein:
- Figure 1 is an axonometric schematic view of the hydraulic element of the invention;
- Figures 2 to 5 show axonometric views of the conduits comprised within the hydraulic element of the invention, shown in different steps of the method of the invention; and
- Figure 6 represents a view in cross section of the hydraulic element of the invention.

With reference to the attached figures, by 1 it has been generally indicated the element or flexible hydraulic means of the invention.

The hydraulic element 1 herein disclosed, comprises three conduits 10, 11, 12, which define corresponding non-intersecting fluid paths able to convey a fluid under pressure.

Each conduit may be tubular and substantially cylindrical.

The invention is especially intended for use in the control of actuators or equipment of the hydraulic type, such as those predisposed on telescopic handlers or similar lifting machines.

For the sake of simplicity, the hydraulic element of the invention will be called hereinafter "hose", although the same is comprised of a plurality of conduits 10, 11, 12 each of which is itself in practice a hose.

According to an important aspect of the invention, the hose 1 proposed comprises a central longitudinal portion 100 in which the axes C1, C2, C3 of the three conduits 10, 11, 12 are arranged angularly spaced one from another.

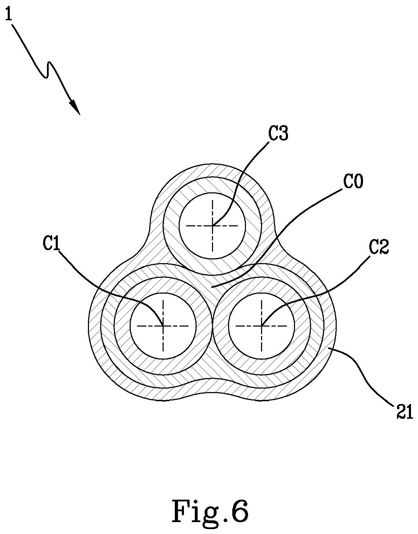

In detail, the axes C1, C2, C3 of the three conduits 10, 11, 12 are arranged about a central axis C0 of the hose 1, with respect to which said axes C1, C2, C3 are angularly spaced (see Figure 6).

The expression "angularly spaced" used in the present description with reference to the conduits 10, 11, 12, obviously means that the conduits are separated by an angle other than a flat angle, and then the three conduits 10, 11, 12 are not co-planar, but arranged at least on two different planes.

To be precise, the central axes C1, C2, C3 of the three conduits 10, 11, 12 are angularly equidistant; however, it is also possible a configuration of the invention in which the axes C1, C2, C3, taken two by two, exhibit different angular distances and variables.

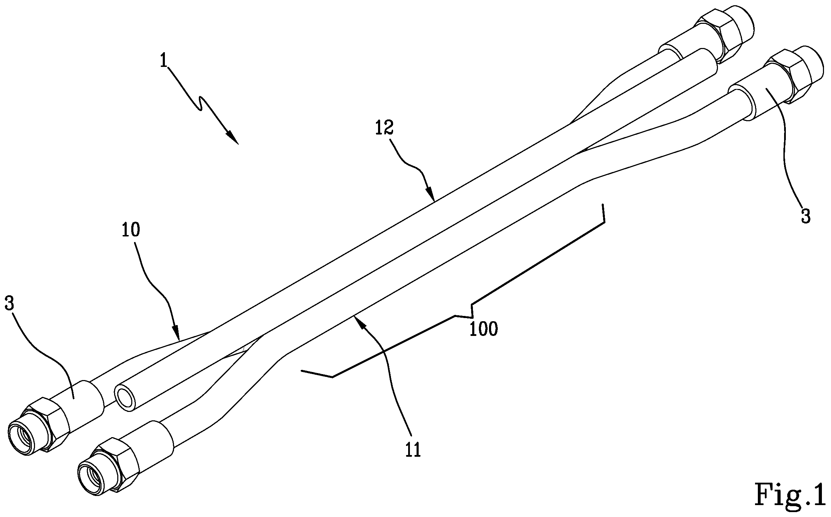

As shown in Figure 1, in the preferred embodiment of the invention, the three conduits 10, 11, 12 are joined in a substantially triangular bundle, thereby defining a triplet triangular hose 1.

In practice, the three conduits 10, 11, 12 are solidly constrained and integrated in the same flexible triangular unit destined for feeding fluid under pressure to hydraulic equipment.

The three conduits 10, 11, 12 are preferably alongside one another and joined at respective walls.

At the ends, and then upstream and downstream of the above longitudinal portion 100, the conduits 10, 11, 12 can then branch off in different directions, so as to be linked with the source or with the destination actuator (see Figure 1), for example via suitable connectors 3.

Note that although the three conduits 10, 11, 12 are suitable to convey fluid under pressure, use thereof can be also made for other purposes.

In detail, according to a preferential, but not mandatory aspect, one of the three conduits 10, 11, 12 of the hose 1 of the invention comprises power supply cables, while the other two conduits are predisposed for the hydraulic supply.

Each conduit 10, 11, 12 can be made of a flexible elastomeric material and the three conduits 10, 11, 12 may be joined together by vulcanization, thereby forming the triplet hose 1 herein disclosed.

The process of the invention will be explained in detail here below. In the preferred embodiment shown in figure 1, the three conduits 10, 11, 12 have same transversal dimensions along aforementioned central portion 100 of the hose 1; thus, in case it deals with cylindrical conduits 10, 11, 12, they will have same diameter.

As already mentioned, flexible hoses must be slidable within the machines whereon they are used.

In detail, in the case where it is inserted in a telescopic arm, the proposed hose 1 may be arranged according to an S-shaped configuration which allows longitudinal sliding when the arm is being extended or re-inserted. In addition, once inserted into organs of the rotating type, the hose 1 of the invention is able to slide about an axis of rotation.

Due to its special configuration, the hose 1 herein provided is capable of feeding destination equipment with all electric and hydraulic necessary uses, while having transversal dimensions smaller than the hoses of the prior art.

Therefore, by employing the proposed hose 1, use of hose reels can be avoided, which is instead necessary in the case of prior art hoses.

Moreover, since the hose is advantageously not provided with a planar configuration, when the proposed triple hose 1 is made to slide, the triple hose 1 does not tend to slide towards a preferred direction, since it doesn't have a direction wherein it is substantially more rigid.

Therefore, the hose 1 of the invention does not tend, during use, to move against the surface of the mechanical members placed in proximity, and therefore is not an obstacle to the correct translation or rotation of the mechanical organs wherein the hose 1 is implemented.

Furthermore, the triple hose 1 has the same degree of flexibility in a plurality of radial directions with respect to said central axis, thus resulting more versatile and above all more comfortable to be handled.

In practice, once bent, the triple hose 1 maintains a certain rigidity which prevents it from rubbing against the surfaces or internal components of the telescopic arm or any other organ within which the triple hose 1 is caused to slide.

Advantageously, the invention allows to decrease the frequency of maintenance operations on movable mechanical parts that carry hydraulic equipment such as telescopic arms of lifters of the rotary type, or the like.

The following describes the method for realizing the hose 1 of the invention.

The proposed method provides first of all to provide at least three conduits 10, 11, 12 for conveying the fluid under pressure, each conduit being made of an elastomeric material.

The method provides a joining step, wherein the three conduits 10, 11, 12 are joined to one another by vulcanization, thereby defining at least one longitudinal portion 100 of a hydraulic element 1, in which longitudinal portion the axes of the three conduits 10, 11, 12 are arranged angularly spaced, as defined above.

In other words, during this joining step, the three conduits 10, 11, 12 are made solidly constrained or integrated so as to define a triple hose 1 which is substantially triangular-shaped.

As already mentioned, in practice, the triple hose 1 is defined by a triangular bundle formed by the conduits 10, 11, 12 joined to one another, which conduits are suitable for a fluid-tight transport of the fluid under pressure.

The joining step preferably occurs in the following manner.

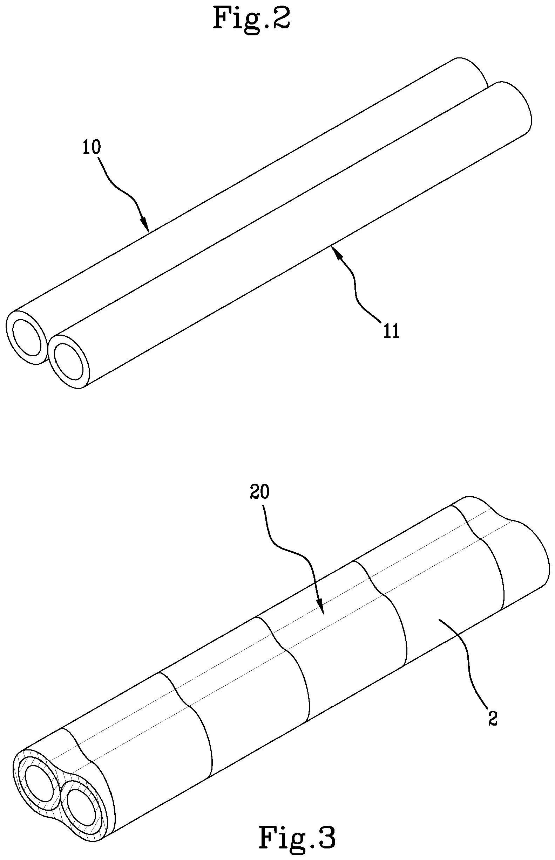

First, as shown in Figure 2, the two conduits 10, 11 are alongside one another; at this stage, the two conduits 10, 11 are covered by at least one elastomeric sheath 2 (Figure 3).

Thereafter, the two covered conduits are joined by vulcanization, thereby coming to define an intermediate unit or semi-finished product.

As can be seen in Figure 3, the outer shape of the walls of the conduits 10 and 11 joined to one another within the semi-finished product, may define a central depression 20.

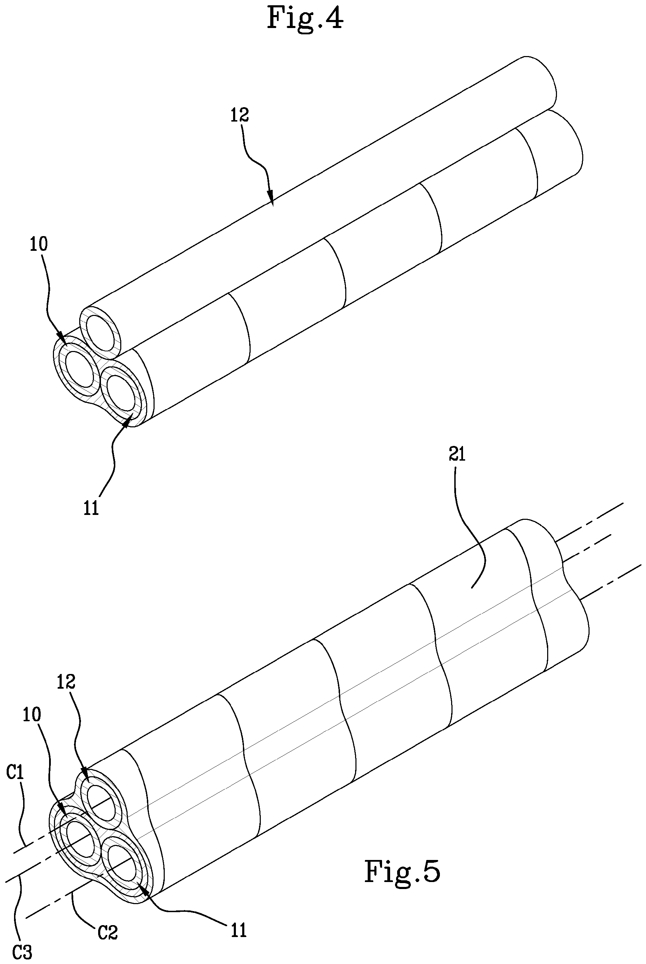

At this stage, as shown in Figure 4, the third hose 12 is arranged above the intermediate unit 10,11, 2 preferably in a central position and at the depression 20, if any.

Then, the semi-finished product and the third conduit are covered with the same elastomeric sheath 21 (Figure 5).

Next, a further vulcanization is performed in order that the triple hose 1 of the invention is defined.

According to an alternative non-illustrated embodiment, there is provided a plurality of elastomeric tubular segments, each defining a respective partial conduit.

These segments are joined together three by three by vulcanization, thus defining a plurality of longitudinal portions, in which the segments are angularly spaced and preferably arranged in a triangle.

The different longitudinal portions are joined two by two in a longitudinal succession, thereby defining the flexible hydraulic element 1, which defines the triple hose 1 herein disclosed.

## Claims

1. A method for producing a flexible hydraulic element (1) for controlling actuators or equipment of the hydraulic type predisposed on lifting machines, comprising the steps of:
a. providing at least three conduits (10, 11, 12) for conveying a fluid under pressure, each conduit being made of an elastomeric material; and
b. joining said three conduits (10, 11, 12) with one another by vulcanisation so as to define at least a longitudinal portion (100) of a hydraulic element (1), in which the axes (C1, C2, C3) of the three conduits (10, 11, 12) are arranged angularly spaced;
wherein step b. is performed as follows: two conduits (10, 11) are placed alongside one another, covered by at least an elastomeric sheath (2) and joined by vulcanisation so as to define an intermediate unit; the third conduit (12) is arranged above said intermediate unit and they are both covered with at least an elastomeric sheath (21); and a further vulcanisation is performed.

2. The method according to the preceding claim, wherein in step b. the said three conduits (10, 11, 12) are joined in a bundle with a substantially triangular shape.

3. Method according to claim 1 or claim 2, wherein an outer shape of the walls of the conduits (10, 11) joined to one another within the intermediate unit (10,11, 2), define a central depression (20), the third hose (12) being arranged above the intermediate unit (10,11, 2) in a central position at said depression (20).

4. A flexible hydraulic element (1) for controlling actuators or equipment of the hydraulic type predisposed on lifting machines, comprising at least three conduits (10, 11, 12) suitable for conveying a fluid under pressure, and comprising at least a longitudinal portion (100) in which the axes (C1, C2, C3) of the three conduits (10, 11, 12) are arranged angularly spaced, **characterized by** being obtained by means of the method according to at least one of claims 1 - 3.

5. The element (1) according to the preceding claim, wherein said three conduits (10, 11, 12) are joined in a substantially triangular bundle.

6. The element (1) according to claim 4 or claim 5, wherein each conduit (10, 11, 12) has a tubular shape.

7. The element (1) according to at least one of claims 4 - 6, wherein at said longitudinal portion (100) the three conduits (10, 11, 12) have the same transversal dimensions.

## Patentansprüche

1. Verfahren zur Herstellung eines flexiblen Hydraulikelements (1) zur Steuerung von Stellern oder Ausrüstungen vom hydraulischen Typ, eingerichtet an Hebeeinrichtungen, umfassend die folgenden Schritte:
a. Bereitstellen von mindestens drei Leitungen (10, 11, 12), um ein Medium unter Druck zu fördern, wobei eine jede Leitung aus einem Elastomermaterial besteht, und
b. Zusammenfügen dieser drei Leitungen (10, 11, 12) durch Vulkanisation, sodass mindestens ein Längsabschnitt (100) eines Hydraulikelements (1) definiert wird, in dem die Achsen (C1, C2, C3) der drei Leitungen (10, 11, 12) winkelig beabstandet angeordnet sind,
wobei Schritt b. wie folgt durchgeführt wird: Zwei Leitungen (10, 11) werden aneinander platziert, überdeckt von mindestens einer Elastomerhülle (2) und zusammengefügt durch Vulkanisation, sodass eine Zwischeneinheit definiert wird, wobei die dritte Leitung (12) über der Zwischeneinheit angeordnet wird und beide mit mindestens einer Elastomerhülle (21) bedeckt werden und eine weitere Vulkanisation durchgeführt wird.

2. Verfahren nach dem vorhergehenden Anspruch, wobei die drei Leitungen (10, 11, 12) in Schritt b. in einem Bündel mit einer im Wesentlichen dreieckigen Form zusammengefügt sind.

3. Verfahren nach Anspruch 1 oder Anspruch 2, wobei eine äußere Form der Wände der Leitungen (10, 11), die innerhalb der Zwischeneinheit (10, 11, 12) zusammengefügt sind, eine mittige Vertiefung (20) definiert, wobei der dritte Schlauch (12) über der Zwischeneinheit (10, 11, 12) in einer mittigen Position an der Vertiefung (20) angeordnet ist.

4. Flexibles Hydraulikelement (1) zum Steuern von Stellern oder Ausrüstungen vom hydraulischen Typ, eingerichtet an Hebeeinrichtungen, umfassend mindestens drei Leitungen (10, 11, 12), geeignet, um ein Medium unter Druck zu fördern, und umfassend mindestens einen Längsabschnitt (100), in dem die Achsen (C1, C2, C3) der drei Leitungen (10, 11, 12) winkelig beabstandet angeordnet sind, **dadurch gekennzeichnet, dass** sie mittels eines Verfahrens nach mindestens einem der Ansprüche 1 bis 3 erhalten sind.

5. Element (1) nach dem vorhergehenden Anspruch, wobei die drei Leitungen (10, 11, 12) in einem im Wesentlichen dreieckigen Bündel zusammengefügt sind.

6. Element (1) nach Anspruch 4 oder Anspruch 5, wobei die Leitung (10, 11, 12) eine rohrförmige Form aufweist.

7. Element (1) nach mindestens einem der Ansprüche 4 bis 6, wobei die drei Leitungen (10, 11, 12) am Längsabschnitt (100) die gleichen Querabmessungen aufweisen.

## Revendications

1. Procédé de fabrication d'un élément hydraulique flexible (1) pour commander des actionneurs ou un équipement de type hydraulique prédisposé sur des machines de levage, comprenant les étapes de :
a. prévoir au moins trois conduits (10, 11, 12) pour acheminer un fluide sous pression, chaque conduit étant constitué d'un matériau élastomère ; et
b. assembler lesdits trois conduits (10, 11, 12) les uns aux autres par vulcanisation de sorte à définir au moins une partie longitudinale (100) d'un élément hydraulique (1), dans laquelle les axes (C1, C2, C3) des trois conduits (10, 11, 12) sont disposés espacés de façon angulaire ;
dans lequel l'étape b. est réalisée comme suit : deux conduits (10, 11) sont placés l'un à côté de l'autre, recouverts au moins d'une gaine élastomère (2) et assemblés par vulcanisation de sorte à définir une unité intermédiaire ; le troisième conduit (12) est disposé au-dessus de ladite unité intermédiaire et sont tous deux recouverts avec au moins une gaine élastomère (21) ; et une vulcanisation supplémentaire est réalisée.

2. Procédé selon la revendication précédente, dans lequel dans l'étape b., lesdits trois conduits (10, 11, 12) sont assemblés dans un faisceau ayant une forme substantiellement triangulaire.

3. Procédé selon la revendication 1 ou la revendication 2, dans lequel une forme extérieure des parois des conduits (10, 11) assemblés l'un à l'autre à l'intérieur de l'unité intermédiaire (10,11, 2), définit une dépression centrale (20), le troisième tuyau (12) étant disposé au-dessus de l'unité intermédiaire (10,11, 2) dans une position centrale en correspondance de ladite dépression (20).

4. Élément hydraulique flexible (1) pour commander des actionneurs ou un équipement de type hydraulique prédisposé sur des machines de levage, comprenant au moins trois conduits (10, 11, 12) adaptés pour acheminer un fluide sous pression, et comprenant au moins une partie longitudinale (100) dans laquelle les axes (C1, C2, C3) des trois conduits (10, 11, 12) sont disposés espacés angulairement, **caractérisé en ce qu'**il est obtenu au moyen du procédé selon au moins une des revendications 1 à 3.

5. Élément (1) selon la revendication précédente, dans lequel lesdits trois conduits (10, 11, 12) sont assemblés dans un faisceau substantiellement triangulaire.

6. Élément (1) selon la revendication 4 ou la revendication 5, dans lequel chaque conduit (10, 11, 12) a une forme tubulaire.

7. Élément (1) selon au moins une des revendications de 4 à 6, dans lequel en correspondance de ladite partie longitudinale (100) les trois conduits (10, 11, 12) ont des dimensions transversales identiques.
